# FASCICULE DE BREVET EUROPEEN

(11) **EP 0 644 236 B1**
(45) Date de publication et mention de la délivrance du brevet: **26.02.1997**
(21) Numéro de dépôt: 93420374.6
(22) Date de dépôt: 17.09.1993
(51) Int. Cl.: C08L 23/06, C08L 23/08

(54) **Mélange de résine à base de polyoléfine et de copolymères d'éthylène et d'acétate de vinyl et/ou d'éthylène-ester acrylique, susceptible d'être extrudé en film et soudé par des courants à haute fréquence**
Hochfrequenz schweissbare und mittels Extrusion filmformende Mischung aus Polyolefin und EVA Copolymer und/oder Ethylen-Akrylester Copolymer
High frequency weldable and film-formable by extrusion blend of polyolefin and EVA copolymer and/or ethylene-acrylic ester copolymer

(43) Date de publication de la demande: 22.03.1995
(73) Titulaire: TECHNOFILM, 69830 Saint Georges de Reneins (FR)
(72) Inventeur: Benatre, Gérard, F-69830 Saint Georges de Reneins (FR)
(74) Mandataire: Maureau, Philippe

(56) Documents cités:
- EP-A- 0 437 152
- WO-A-86/07034
- DE-A- 3 914 329

## Description

L'invention concerne un matériau thermo-plastique pouvant être extrudé sous forme de film mince et susceptible de se souder par la technique de soudure par les courants à haute fréquence. Elle constitue notamment un perfectionnement de la demande de brevet francais n° 89-16317 et de la demande de certificat d'addition n' 90-01384 dénommés ci-après "les brevets".

Les brevets, dont l'invention décrit un perfectionnement, revendiquent la réalisation de films à partir d'un matériau composé principalement de résine de polyéthylène et d'éthyl-vinyl-acétate dénommé ci-après "E.V.A.". Ce matériau contient, en outre, en proportions convenables, des charges, afin d'en modifier les propriétés physiques, pour qu'il puisse remplacer les films en polychlorure de vinyl dénommé, ci-après, "P.V.C." dans un certain nombre d'applications dans lesquelles le P.V.C., qui est employé notamment pour ses propriétés de soudabilité par les courants haute fréquence, est devenu indésirable. Cependant, on constate que l'emploi du radical Vinyl-acétate dénommé, ci-après, "V.A.", comme agent permettant la soudure par les courants à haute fréquence, introduit certains inconvénients que les charges rapportées habituellement ne peuvent pas masquer. On constate notamment, qu'au cours de la soudure, il se dégage une odeur d'acide acétique qui gêne les personnes qui conduisent les machines et peut remettre en cause l'emploi de ce produit. Par ailleurs, le marché du film P.V.C. couvre une bonne partie des objets gonflés de forme plus ou moins complexes ; cela concerne les bouées gonflables pour les enfants, les canots gonflables et tous les produits qui en sont dérivés. On constate que les objets gonflables, réalisés à base de films contenant de l'E.V.A., présentent deux inconvénients majeurs qui se cumulent ; d'une part, on constate que la pression de l'air dans l'objet gonflé chute rapidement et que, d'autre part, le film se déforme par fluage, ce qui contribue à la chute de pression de l'air. L'objet de l'invention consiste à apporter des solutions à ces problèmes sans changer le process de transformation qui est actuellement utilisé, en faisant évoluer les matières utilisées.

A cet effet, le matériau suivant l'invention est composé d'un mélange de résine polyoléfine, et d'un mélange de copolymères d'Ethylène Vinyl Acétate (EVA) contenant des radicaux d'Acétate de Vinyle et d'Ethylène Ester Acrylique contenant des radicaux d'Ester Acrylique, le poids des seuls radicaux représentant de 10 à 30 % du poids du mélange global. L'opération se fait par simple mélange de résines trouvées dans le commerce et concues pour la réalisation de films et qui sont déjà des mélanges de sels organiques avec une ou plusieurs autres résines polyoléfines telles que le polyéthylène et/ou le polypropylène. Le composé à base d'E.V.A. utilisé peut contenir, par exemple, de l'ordre de 18 % à 30 % en poids de V.A. pur, tandis que le copolymère d'Ester Acrylique peut contenir de l'ordre, par exemple, de 30 % en poids de radicaux Ester Acrylique. On réalise des mélanges en proportions variables d'E.V.A. et/ou de copolymères d'Ester Acrylique et, par exemple, de polyéthylène, qui peuvent être extrudés sous forme de film directement ou après addition de charges destinées par exemple à rigidifier ou à augmenter la tenue à la température ou à le colorer : les essais ont montré qu'avec un mélange de copolymères de résines de polyéthylène, du type de celles décrites dans les brevets, contenant une proportion de 10 à 30 % en poids de radicaux de V.A. et/ou d'Ester Acrylique par rapport au poids total, il est possible d'obtenir un film qui se soude bien, sur lui même, par courant à haute fréquence. La variation du pourcentage en poids d'Ester Acrylique par rapport au poids de l'ensemble V.A. et Ester Acrylique, peut varier dans une très large fourchette pouvant aller de 10 % à 100 % d'Ester Acrylique. En pratique, l'apport d'Ester Acrylique commence réellement à se faire sentir au-dessus de 20 % dans le mélange Ester Acrylique et V.A.. On peut être tenté de remplacer le V.A. par de l'Ester Acrylique, mais aujourd'hui les prix des copolymères d'Ester Acryliques sont beaucoup plus élevés que ceux de mélange contenant du V.A., et en conséquence il est plus économique de choisir le taux d'Ester Acrylique, par rapport au V.A., en fonction des applications, de manière à minimiser les coûts de matière.

Dans une version préférée de l'invention, on obtient d'excellents résultats en faisant un mélange contenant 18 % +/-3 %, en poids cumulé de V.A. et d'Ester Acrylique sous forme de copolymère, le reste étant constitué de polyéthylène. L'ensemble des radicaux actifs formé de V.A. et d'Ester Acrylique contient de préférence 30 % +/-10 % de V.A. et 70 % -/+ 1 0 % d'Ester Acrylique. On constate aussi que la vitesse de soudure augmente avec le taux d'Ester Acrylique par rapport au V.A. . On peut estimer qu'on garde la même vitesse de soudure en remplaçant, dans un mélange 1 % de V.A. par 0,8 % d'Ester Acrylique, ce qui veut dire, qu'à vitesse de soudure égale, on utilise moins de radicaux actifs et plus de polyéthylène. Ce résultat est un des éléments permettant de constater une meilleure tenue des films. Notamment, on peut constater que les films contenant de la résine d'Ester Acrylique ont moins de mémoire que les films ne contenant que de la résine d'E.V.A. et ne présentent plus le phénomène de "tuile" constaté lorsqu'il y a seulement de la résine d'E.V.A. Cette propriété est un avantage lorsqu'il s'agit notamment de confectionner des pochettes destinées à recevoir de la documentation pour lesquelles l'effet de tue porte préjudice à l'esthétique du produit. L'augmentation de la vitesse de soudure grâce à l'apport d'Ester Acrylique permet de retrouver les vitesses de soudures qui étaient obtenues avec le P.V.C. . On estime qu'au-delà de 40 % d'Ester Acrylique, dans le mélange Ester Acrylique et V.A., on obtient une vitesse de soudure comparable à celle du P.V.C. . Des essais comparatifs d'étanchéité à l'air ont été réalisés sur des objets gonflables par rapport au P.V.C. d'une part, et par rapport à un film contenant uniquement de la résine E.V.A. dans une proportion de 12 à 18 % de V.A. d'autre part.

Un film de P.V.C. de 440 microns, gonflé initialement à 100 millibars, a perdu 72 % de sa pression en 13 jours, tandis qu'un film contenant 15 % de V.A. de 200 microns ne perdait que 50 % en 19 jours.

On a constaté une nette amélioration de la tenue à l'air du film contenant de l'Ester Acrylique par rapport au film contenant uniquement de l'E.V.A. .

On a écrit précédemment qu'un film contenant 15 % de V.A. de 200 microns ne perdait que 50 % en 19 jours ; en comparaison, un film de 225 microns, contenant 16 % de V.A. et 5 % d'Ester Acrylique, a perdu 47 % en 27 jours. Ce résultat, ramené linéairement à la même épaisseur et à la même chute de pression donne un gain de l'ordre de 35 %.

On a aussi constaté une diminution du fluage du film contenant de l'Ester Acrylique, ce qui peut expliquer, en partie, le gain spectaculaire constaté dans le test décrit précédemment. Enfin, lorsque le taux d'Ester Acrylique par rapport à la masse de V.A. et d'Ester Acrylique se situe au-dessus de 40 %, l'odeur d'acide acétique se dégageant lors de la soudure n'est plus décelable par le personnel travaillant sur les machines à souder. Les mélanges résine d'E.V.A., d'Ester Acrylique, et de polyéthylène peuvent être combinés aux charges décrites dans les brevets cités, de manière à améliorer plus spécifiquement certaines caractéristiques en fonction des applications, pour obtenir sensiblement les mêmes performances. De même, les essais ont montré qu'il est possible de souder entre eux des films réalisés avec des mélanges selon l'invention mais dans des pourcentages différents. Il est nécessaire, cependant, de respecter les vitesses d'échauffement, qui ne doivent pas trop être différentes, sinon, suivant que l'on prend comme référence pour le temps de soudure l'un ou l'autre film, on obtient soit l'écrasement du film, dont l'échauffement est le plus rapide, qui s'extrude de part et d'autre de l'électrode et se destructure, soit une soudure qui reste un simple collage fragile. La recherche de la compatibilité se fait généralement de manière empirique en tenant compte des teneurs en résine active pour la soudure, des charges et des épaisseurs. Dans la version préférée de l'invention décrite ci-dessus, on obtient une très large plage de compatibilité pour la soudure avec des films, chargés ou non, ayant des pourcentages en poids de V.A. et d'Ester Acrylique différents. Enfin, l'utilisation de résines contenant des Esters Acryliques ne change rien aux performances déjà obtenues aux basses températures avec les résines contenant du V.A. .

## Revendications

1. Matériau thermo-plastique soudable par haute fréquence, dont la soudabilité est ajustable, en fonction des matériaux de composition voisine à assembler, et/ou des contraintes concernant les conditions de travail et l'environnement, et notamment destiné au remplacement du polychlorure de vinyle dans ses applications utilisant des films souples, caractérisé en ce qu'il est composé d'un mélange de résine polyoléfine, et d'un mélange de copolymères d'Ethylène Vinyl Acétate (EVA) contenant des radicaux d'Acétate de Vinyle et d'Ethylène Ester Acrylique contenant des radicaux d'Ester Acrylique, le poids des seuls radicaux représentant de 10 à 30 % du poids du mélange global.

2. Matériau thermo-plastique, suivant la revendication précédente, caractérisé en ce que le mélange de copolymères contenant des radicaux d'Acétate de Vinyle et d'Ester Acrylique contient au moins 40 % en poids d'Ester Acrylique.

3. Matériau thermo-plastique, suivant l'une quelconque des revendications précédentes, caractérisé en ce que le mélange de copolymères contenant des radicaux d'Acétate de Vinyle et d'Ester Acrylique contient en poids 30 % +/-10 % de radicaux d'Acétate de Vinyle et 70 % -/+ 10 % d'Ester Acrylique.

4. Matériau thermo-plastique, suivant l'une quelconque des revendications précédentes, caractérisé en ce que le poids cumulé de radicaux d'Acétate de Vinyle et d'Ester Acrylique représente 18 % +/- 3 % du poids total des copolymères et des résines polyoléfines.

5. Application du matériau thermo-plastique, suivant l'une quelconque des revendications précédentes à la réalisation de films destinés àfabriquer des objets notamment par soudure à haute fréquence.

## Claims

1. Thermoplastic material, weldable by high frequency, the weldability of which is adjustable in relation to the materials of a similar composition to be assembled, and/or the constraints concerning working conditions and the environment, and in particular intended to replace polyvinyl chloride in its applications using flexible films, characterized in that it is composed of a mixture of polyolefin resin and a mixture of ethylene vinyl acetate (EVA) copolymers containing vinyl acetate radicals and ethylene acrylic ester containing acrylic ester radicals, the weights of the radicals alone representing 10 to 30% by weight of the overall mixture.

2. Thermoplastic material, according to the preceding claim, characterized in that the mixture of copolymers containing vinyl acetate and acrylic ester radicals contain at least 40% by weight of acrylic ester.

3. Thermoplastic material, according to any one of the preceding claims, characterized in that the mixture of copolymers containing the vinyl acetate and acrylic ester radicals contains 30% ± 10% of vinyl acetate radicals and 70% ± 10% of acrylic ester radicals.

4. Thermoplastic material, according to any one of the preceding claims, characterized in that the cumulative weight of vinyl acetate and acrylic ester radicals represents 18% ± 3% of the total weight of copolymers and polyolefin resins.

5. Application of the thermoplastic material, according to any one of the preceding claims to the production of films intended for the manufacture of objects in particular by high frequency welding.

## Patentansprüche

1. Thermoplastisches, durch Hochfrequenz schweißbares Material, dessen Schweißbarkeit einstellbar ist, abhängig von den benachbarten Materialien der zusammenzufügenden Zusammensetzung und/ oder den Beschränkungen betreffend die Arbeitsbedingungen und die Umgebung, und im besonderen bestimmt zum Ersatz von Polyvinylchlorid in seinen Anwendungen, die für schweißbare Filme gebraucht werden,
**dadurch gekennzeichnet, daß**
es aus einer Mischung aus Polyolefinharz und einer Mischung von Copolymeren von Ethylvinylacetat (EVA) zusammengesetzt ist, die Radikale von Vinylacetat und von Ethylen-Acrylester, enthaltend Radikale von Acrylester, enthalten, das Gewicht jedes einzelnen Radikals darstellend 10% bis 30% des Gewichts der ganzen Mischung.

2. Thermoplastisches Material gemäß dem vorstehenden Anspruch, **dadurch gekennzeichnet, daß** die Mischung der Copolymere, die Radikale des Vinylacetat und des Acrylesters enthalten, mindestens 40 Gewichtsprozent von Acrylester aufweist.

3. Thermoplastisches Material gemäß irgendeinem der vorstehenden Ansprüche, **dadurch gekennzeichnet, daß** die Mischung der Copolymere, die Radikale des Vinylacetats und des Acrylesters enthalten, 30 Gewichtsprozent +/- 10 Prozent von Radikalen des Vinylacetats und 70 Gewichtsprozent +/- 10 Prozent des Acrylesters enthalten.

4. Thermoplastisches Material gemäß irgendeinem der vorstehenden Ansprüche, **dadurch gekennzeichnet, daß** das kumulierte Gewicht der Radikale des Vinylacetats und des Acrylesters 18 Prozent +/- 3 Prozent des gesamten Gewichtes der Copolymere und des Polyolefinharzes beträgt.

5. Anwendung des thermoplastischen Materials gemäß irgendeinem der vorstehenden Ansprüche für die Realisierung von Filmen, die zur Herstellung von Objekten insbesondere durch Schweißen mittels Hochfrequenz bestimmt sind.
